# EUROPÄISCHE PATENTSCHRIFT

(11) **EP 3 620 407 B1**
(45) Veröffentlichungstag und Bekanntmachung des Hinweises auf die Patenterteilung: **18.06.2025**
(21) Anmeldenummer: 19195587.1
(22) Anmeldetag: 05.09.2019
(51) Int. Cl.: G01M 13/04, B65G 9/00, B65G 17/20, B65G 19/02, B65G 43/02

(54) **ROLLENPRÜFEINRICHTUNG FÜR EINEN ROLLADAPTER EINES HÄNGEFÖRDERSYSTEMS**
ROLLER TESTING DEVICE FOR A ROLLER ADAPTER OF A SUSPENSION CONVEYOR SYSTEM
DISPOSITIF D'ESSAI DE ROULEAUX POUR UN ADAPTATEUR À ROULEAUX D'UN SYSTÈME DE TRANSPORT SUSPENDU

(30) Priorität: 10.09.2018 DE 102018215319
(43) Veröffentlichungstag der Anmeldung: 11.03.2020
(73) Patentinhaber: Dürkopp Fördertechnik GmbH, 33719 Bielefeld (DE)
(72) Erfinder: Sieksmeier, Dirk, 32139 Spenge (DE); Merten, Markus, 33605 Bielefeld (DE)
(74) Vertreter: Rau, Schneck & Hübner Patentanwälte Rechtsanwälte PartGmbB

(56) Entgegenhaltungen:
- EP-A1- 2 818 434
- DE-A1- 19 825 955
- FR-A1- 2 942 282
- JP-A- 2005 061 933
- JP-A- 2008 039 708
- JP-A- 2018 132 332
- US-A1- 2011 147 332
- PSI ET AL: "Verlässliche Systeme schaffen Betriebs-und Prozess-Sicherheit", 9 August 2016 (2016-08-09), XP055661483, Retrieved from the Internet <URL:https://web.archive.org/web/20160809050043if_/http://psi-technics.com/PDF/D/PSI-2458-Applikationsbericht-VW-Inlinekontrolle-DE-2014-01-10-1.pdf> [retrieved on 20200123]
- ANONYMOUS: "Datei:RFID 125 kHz Glass Tag 1.jpg - Wikipedia", 23 January 2009 (2009-01-23), XP093014545, Retrieved from the Internet <URL:https://de.wikipedia.org/wiki/Datei:RFID_125_kHz_Glass_Tag_1.jpg> [retrieved on 20230117]

## Beschreibung

Die vorliegende Patentanmeldung nimmt die Priorität der deutschen Patentanmeldung 10 2018 215 319.1 in Anspruch.

Die Erfindung betrifft eine Rollenprüfeinrichtung für einen Rolladapter eines Hängefördersystems, ein Hängefördersystem mit einer derartigen Rollenprüfeinrichtung sowie einen derartigen Rolladapter. Ferner betrifft die Erfindung ein Verfahren zum Betreiben einer Rollenprüfeinrichtung. Aus der EP 2 130 968 A1 ist ein Hängefördersystem zum Transport von Waren bekannt. Das Hängefördersystem weist eine Förderschieneneinrichtung zum Transportieren von Rolladaptern entlang einer Förderlinie auf.

Die Rolladapter unterliegen einem Verschleißprozess. Verschlissene Rolladapter können beim Transport entlang der Förderschieneneinrichtung blockieren und dabei den Betrieb des Hängefördersystems stören. Insbesondere kann es zu unerwünschten und kostenintensiven Stillstandszeiten kommen.

Rollenprüfeinrichtungen zum Bestimmen des Verschleißzustands eines Rolladapters sind bekannt aus dem Projektbericht "Verlässliche Systeme schaffen Betriebs- und Prozesssicherheit" der PSI Technics GmbH vom 09.08.2016, der JP 2005 061933 A, der JP 2018 132332 A und der JP 2008 039708 A. Aus dem Projektbericht "Verlässliche Systeme schaffen Betriebs-und Prozess-Sicherheit" ist eine Rollenprüfeinrichtung für einen Rolladapter eines Hängefördersystems, umfassend
- eine Antriebseinheit zum Drehantreiben mindestens einer Tragrolle des Rolladapters,
- eine Sensoreinheit zum Erfassen eines mit einem Verschleißzustand eines Drehlagers der mindestens einen Tragrolle korrelierenden Messwerts und
- eine Auswerteeinheit zum Bestimmen des Verschleißzustands anhand des Messwerts bekannt. Darüber hinaus offenbart der Projektbericht ein Verfahren zum Betreiben einer Rollenprüfeinrichtung, umfassend die Schritte:
- Bereitstellen eines Rolladapters mit einem Grundkörper und mindestens einer mittels eines Drehlagers drehbar an dem Grundkörper angebrachten Tragrolle,
- Drehantreiben der mindestens einen Tragrolle,
- Erfassen eines mit einem Verschleißzustand der mindestens einen Tragrolle korrelierenden Messwerts und
- Bestimmen des Verschleißzustands anhand des Messwerts.

Der Erfindung liegt die Aufgabe zugrunde, eine Vorrichtung zu schaffen, welche den störungsfreien Betrieb eines Hängefördersystems in besonders zuverlässiger Weise gewährleistet. Insbesondere soll die Vorrichtung hierzu ein frühzeitiges Erkennen verschlissener Rolladapter ermöglichen.

Diese Aufgabe wird durch eine Rollenprüfeinrichtung mit den Merkmalen des Anspruchs 1 gelöst. Der Kern der Erfindung besteht darin, dass die Rollenprüfeinrichtung die Antriebseinheit zum Drehantreiben der mindestens einen Tragrolle sowie die Sensoreinheit zum Erfassen des mit dem Verschleißzustand des Drehlagers korrelierenden Messwerts aufweist, wobei die Auswerteeinheit zum Bestimmen des Verschleißzustands anhand des Messwerts ausgebildet ist. Die Rollenprüfeinrichtung ist damit insbesondere zum automatisierten Bestimmen des Verschleißzustands des Rolladapters, insbesondere des jeweiligen Drehlagers des Rolladapters, ausgebildet. Durch das Bestimmen des Verschleißzustands können verschlissene Rolladapter frühzeitig erkannt werden. Insbesondere können Rolladapter mit schwergängigen Drehlagern identifiziert werden. Durch das frühzeitige Erkennen derart verschlissener Rolladapter kann ein Blockieren von Rolladaptern in einer Förderschieneneinrichtung des Hängefördersystems zuverlässig verhindert werden. Ein Stillstand und/oder eine Beschädigung des Hängefördersystems durch blockierende Rolladapter kann somit vermieden werden. Mittels der Rollenprüfeinrichtung kann ein Aussortieren der Rolladapter anhand von dessen tatsächlichem Verschleiß erfolgen. Ein Austausch sämtlicher Rolladapter nach einer bestimmten Lebensdauer, unabhängig von dem tatsächlichen Verschleiß der Rolladapter, kann vermieden werden. Das Hängefördersystem kann somit besonders wirtschaftlich betrieben werden.

Bei der erfindungsgemäßen Rollenprüfeinrichtung weist die Sensoreinheit einen Drehsensor zum Erfassen des Messwerts in Form einer Drehbewegung der mindestens einen Tragrolle auf. Dies gewährleistet das Erfassen des mit dem Verschleißzustand des Drehlagers korrelierenden Messwerts in besonders zuverlässiger Weise. Der Drehsensor kann zum Erfassen der Anzahl an Umdrehungen und/oder einer Drehgeschwindigkeit und/oder einer Drehgeschwindigkeitsänderung der mindestens einen Tragrolle ausgebildet sein.

Der Drehsensor kann auch zum Bestimmen einer Auslaufdauer ausgebildet sein. Die Auslaufdauer ist durch diejenige Zeitdauer bestimmt, welche verstreicht zwischen dem Eintritt der mindestens einen Tragrolle in den Erfassungsbereich des Drehsensors bis zu dem Zeitpunkt, in dem die mindestens eine Tragrolle gegenüber einem Grundkörper des Rolladapters stillsteht. Die Drehbewegung korreliert mit einem Drehwiderstand der mindestens einen Tragrolle relativ zu dem Grundkörper, wobei der Drehwiderstand mit dem Verschleißzustand des Rolladapters, insbesondere der Drehlager, korreliert.

Das Erfassen der Drehbewegung der mindestens einen Tragrolle ermöglicht somit in besonders einfacher Weise einen Rückschluss auf den Verschleißzustand des Rolladapters.

Die erfindungsgemäße Rollenprüfeinrichtung weist eine Trageinheit zum Tragen des Rolladapters in einem Erfassungsbereich der Sensoreinheit auf, derart, dass die mindestens eine Tragrolle frei drehbar ist Eine derartige Rollenprüfeinrichtung ist besonders flexibel betreibbar. Unter der freien Drehbarkeit der mindestens einen Tragrolle ist zu verstehen, dass auf die mindestens eine Tragrolle des auf die über das Drehlager wirkenden Lagerkräfte keine weiteren Kräfte auf die mindestens eine Tragrolle einwirken. Vorzugsweise ist die Trageinheit derart ausgebildet, dass diejenige Tragrolle frei drehbar ist, zu deren Drehlager der Verschleißzustand bestimmt wird. Vorzugsweise ist hierzu die Antriebseinheit außerhalb des Erfassungsbereichs der Sensoreinheit angeordnet. Im Erfassungsbereich der Sensoreinheit ist die Antriebseinheit von der mindestens einen Tragrolle entkoppelt. Gemäß einem Aspekt der Erfindung wirkt die Trageinheit zum Tragen des Rolladapters mit einer zweiten Tragrolle des Rolladapters zusammen.

Gemäß einem Aspekt der Erfindung weist die Antriebseinheit zum Drehantreiben der mindestens einen Tragrolle einen Antriebsmotor auf. Der Antriebsmotor kann über eine Antriebskupplung der Antriebseinheit mit der mindestens einen Tragrolle zusammenwirken. Vorzugsweise ist die Antriebskupplung zum Übertragen der Drehbewegung reversibel mit der mindestens einen Tragrolle verbindbar. Die Drehbewegung kann mittels der Antriebskupplung stirnseitig und/oder umfangsseitig auf die mindestens eine Tragrolle übertragen werden. Gemäß einem Aspekt der Erfindung ist die Antriebseinheit ausschließlich zum Drehantreiben der mindestens einen Tragrolle zum Bestimmen des Verschleißzustands des Rolladapters, insbesondere des mindestens einen Drehlagers, ausgebildet.

Gemäß einem weiteren Aspekt der Erfindung weist die Sensoreinheit zum Erfassen des mit dem Verschleißzustand des Drehlagers korrelierenden Messwerts mindestens einen Sensor auf. Der Sensor kann als Beschleunigungssensor, insbesondere als Vibrationssensor, ausgebildet sein. Abhängig von einer Vibration des drehangetriebenen Drehlagers kann mittels des Beschleunigungssensors auf den Verschleißzustand rückgeschlossen werden. Der Sensor kann auch als Mikrofon ausgebildet sein. Mittels des Mikrofons kann beispielsweise eine Drehzahl der mindestens einen Tragrolle anhand der Laufgeräusche bestimmt werden. Insbesondere kann anhand der Drehgeräusche eine Drehzahländerung bestimmt werden. Der Sensor kann auch als Temperatursensor, insbesondere als Infrarotsensor und/oder als Wärmebildkamera, ausgebildet sein. Mittels des Temperatursensors kann eine mit dem Verschleißzustand des Rolladapters korrelierende Reibungswärme in dem Drehlager bestimmt werden. Der Sensor kann auch als optischer Sensor, insbesondere als Lichtschranke ausgebildet sein. Zum Erfassen der Drehbewegung der mindestens einen Tragrolle, insbesondere einer mit dem Verschleißzustand korrelierenden Drehzahländerung, kann der optische Sensor beispielsweise eine Drehbewegung einer mit der mindestens einen Tragrolle verbundenen Lochscheibe und/oder eines reflektierenden Bereichs erfassen. Der Sensor kann auch als kapazitiver Sensor und/oder als induktiver Sensor, insbesondere als Hall-Sensor, ausgebildet sein. Beispielsweise kann an der mindestens einen Tragrolle ein Dauermagnet angebracht sein, welcher mittels des induktiven Sensors zum Bestimmen einer Drehbewegung der mindestens einen Tragrolle erfasst wird.

Gemäß einem Aspekt der Erfindung weist die Rollenprüfeinrichtung ein Identifikationsmittel-Lesegerät auf. Das Identifikationsmittel-Lesegerät kann zum Erfassen einer für jeden Rolladapter individuell vergebenen Identifikationskennung, insbesondere einer Identifikationsnummer, ausgebildet sein. Vorzugsweise ist das Identifikationsmittel-Lesegerät zum Auslesen eines RFID-Transponders (engl. radio-frequency identification) und/oder eines Matrixcodes und/oder eines Barcodes, ausgebildet. Das Identifikationsmittel-Lesegerät steht vorzugsweise in Signalverbindung mit der Auswerteeinheit.

Die Trageinheit der erfindungsgemäßen Rollenprüfeinrichtung kann als Schienenprofil ausgebildet sein. Vorzugsweise ist die Sensoreinheit ortsfest an der Trageinheit angeordnet, insbesondere starr mit der Trageinheit verbunden. Gemäß einem weiteren Aspekt der Erfindung ist die Antriebseinheit zum, insbesondere linearen, Verlagern des Rolladapters relativ zu der Trageinheit ausgebildet. Die Sensoreinheit kann zum Erfassen des mit dem Verschleißzustand des Drehlagers korrelierenden Messwerts während des Verlagerns des Rolladapters relativ zu der Trageinheit ausgebildet sein. Die Sensoreinheit kann auch, insbesondere mit dem Rolladapter mit, relativ zu der Trageinheit verlagerbar ausgebildet sein.

Gemäß einem Aspekt der Erfindung ist die Sensoreinheit seitlich an dem Rolladapter angeordnet. Die Sensoreinheit kann beabstandet zu der Trageinheit angeordnet sein. Die Sensoreinheit kann auch unmittelbar an der Trageinheit angeordnet sein.

Eine Rollenprüfeinrichtung, bei der die Sensoreinheit ein Kamerasystem zum optischen Erfassen des Messwerts aufweist, ist besonders flexibel betreibbar. Das System ist beispielsweise zum Erfassen einer an der mindestens einen Tragrolle angebrachten Markierung ausgebildet. Die Auswerteeinheit kann dazu ausgebildet sein, anhand des erfassten Messwerts eine Drehbewegung der mindestens einen Tragrolle zu bestimmen. Das System kann auf flexible Weise zum Erfassen unterschiedlicher Markierungen ausgebildet sein. Insbesondere kann die ein Kamerasystem aufweisende Sensoreinheit zum Erfassen der Drehbewegung der mindestens einen Tragrolle einer kontinuierlichen Bewegung des Rolladapters relativ zu der Trageinheit ausgebildet sein. Die Rollenprüfeinrichtung ist somit in einen kontinuierlichen Förderprozess des Rolladapters integrierbar. Das Erfassen des Messwerts kann besonders robust, insbesondere während einer unbestimmten Bewegung, insbesondere trotz Vibrationsbewegungen und/oder Pendelbewegungen, des Rolladapters erfolgen.

Eine Rollenprüfeinrichtung nach Anspruch 3 ist besonders effizient betreibbar und in wirtschaftlicher Weise realisierbar. Die Antriebseinheit kann als Schienenantrieb zum Fördern des Rolladapters entlang eines Schienenprofils ausgebildet sein. Der Gegenrollenkörper kann eine Tragschiene des Schienenprofils umfassen. Das Antriebsmittel ist vorzugsweise als Kettenantrieb ausgebildet. Vorzugsweise ist das Antriebsmittel zum linearen Verlagern des Rolladapters parallel zu der Tragschiene ausgebildet. Die Rollenprüfeinrichtung ist somit besonders einfach in die Förderschieneneinrichtung integrierbar.

Eine Rollenprüfeinrichtung, bei der der Gegenrollenkörper eine vorspringenden Rollenrampe zum Erhöhen einer zwischen dem Gegenrollenkörper und der mindestens einen Tragrolle wirkenden Anpresskraft aufweist, gewährleistet das Drehantreiben der mindestens einen Tragrolle in besonders zuverlässiger Weise. Die Rollenrampe ist vorzugsweise unmittelbar vor einem Erfassungsbereich der Sensoreinheit angeordnet. Die Rollenrampe kann als eine in vertikaler Richtung nach oben vorspringende Erhöhung der Tragschiene ausgebildet sein. Die Rollenrampe gewährleistet eine Erhöhung der von dem Gegenrollenkörper auf die mindestens eine Tragrolle wirkenden Anpresskraft, insbesondere unmittelbar vor dem Erfassungsbereich der Sensoreinheit, wodurch das Drehantreiben der mindestens einen Tragrolle besonders zuverlässig erfolgen kann.

Eine Rollenprüfeinrichtung nach Anspruch 4 gewährleistet das Bestimmen des Verschleißzustands in besonders zuverlässiger Weise. Die Rollenprüfeinrichtung kann mindestens zwei, insbesondere mindestens drei, insbesondere mindestens vier, Führungsschienen zum seitlichen Führen des Rolladapters, insbesondere in dem Erfassungsbereich, aufweisen. Vorzugsweise ist mindestens eine Führungsschiene unterhalb der mindestens einen Tragrolle an der Trageinheit angeordnet. Die mindestens eine unterhalb der mindestens einen Tragrolle angeordnete Führungsschiene wirkt vorzugsweise mit dem Grundkörper des Rolladapters zum seitlichen Führen zusammen. Die Rollenprüfeinrichtung kann auch zwei unterhalb der mindestens einen Tragrolle angeordnete Führungsschienen zum beidseitigen Führen des Rolladapters aufweisen. Die Rollenprüfeinrichtung kann auch eine oder zwei zum einseitigen oder beidseitigen seitlichen Führen des Rolladapters ausgebildete Führungsschienen oberhalb der mindestens einen Tragrolle aufweisen. Die mindestens eine Führungsschiene gewährleistet vorteilhaft, dass eine Drehachse der mindestens einen Tragrolle stets senkrecht zu einer Förderrichtung des Rolladapters und/oder parallel zu einer Erfassungsrichtung der Sensoreinheit orientiert ist. Zudem kann der Rolladapter mittels der mindestens einen Führungsschiene besonders sicher an der Trageinheit, insbesondere an der Tragschiene, geführt und angebracht sein.

Eine weitere Aufgabe der Erfindung besteht darin, ein Hängefördersystem zu verbessern.

Diese Aufgabe wird durch ein Hängefördersystem mit den Merkmalen des Anspruchs 5 gelöst. Die Vorteile des erfindungsgemäßen Hängefördersystems entsprechen den Vorteilen der vorstehend beschriebenen Rollenprüfeinrichtung. Gemäß einem Aspekt der Erfindung umfasst das Hängefördersystem eine Transporteinheit mit einer Zuführstrecke zum Verlagern des Rolladapters aus der Förderschieneneinrichtung zu der Rollenprüfeinrichtung und/oder einer Abführstrecke zum Verlagern des Rolladapters aus der Rollenprüfeinrichtung in die Förderschieneneinrichtung. Das Hängefördersystem weist vorzugsweise mindestens zwei Rollenprüfeinrichtungen auf. Insbesondere weist das Hängefördersystem eine Rollenprüfeinrichtung je Tragrolle des Rolladapters auf. Vorteilhaft wird jedoch erreicht, dass der Verschleißzustand der Drehlager jeder der Tragrollen unabhängig voneinander bestimmt werden kann. Die mehreren Rollenprüfeinrichtungen können parallel zueinander angeordnet sein, wobei der Rolladapter die Rollenprüfeinrichtungen in beliebiger Reihenfolge durchlaufen kann. Alternativ können die Rollenprüfeinrichtungen in Reihe geschaltet sein, wobei der Rolladapter sämtliche der Rollenprüfeinrichtungen in einer bestimmten Reihenfolge durchläuft.

Ein Hängefördersystem nach Anspruch 6 ist besonders wirtschaftlich betreibbar. Vorzugsweise ist die Trageinheit der Rollenprüfeinrichtung durch ein Schienenprofil der Förderschieneneinrichtung ausgebildet. Vorzugsweise wird die Antriebseinheit der Rollenprüfeinrichtung durch einen Schienenantrieb der Förderschieneneinrichtung ausgebildet.

Ein Hängefördersystem nach Anspruch 7 kann besonders wirtschaftlich betrieben werden. Vorzugsweise wird ein Rolladapter, dessen Verschleißzustand außerhalb eines zulässigen Verschleißzustands liegt, mittels der Sortierweiche automatisch aus der Förderschieneneinrichtung aussortiert.

Eine weitere Aufgabe der Erfindung besteht darin, ein Verfahren zum Betreiben einer Rollenprüfeinrichtung zu verbessern.

Diese Aufgabe wird durch ein Verfahren mit den Merkmalen des Anspruchs 8 gelöst.

Die Vorteile des erfindungsgemäßen Verfahrens entsprechen den bereits beschriebenen Vorteilen der erfindungsgemäßen Rollenprüfeinrichtung, des Hängefördersystems und des Rolladapters. Das Verfahren kann insbesondere auch mit den im Zusammenhang mit der Rollenprüfeinrichtung, dem Hängefördersystem und dem Rolladapter genannten Merkmalen, insbesondere mit den Merkmalen von mindestens einem der Ansprüche 1 bis 7, weitergebildet werden.

Bei dem erfindungsgemäßen Verfahren wird zum Erfassen des Messwerts eine Drehbewegung der mindestens einen Tragrolle erfasst. Dies gewährleistet das Bestimmen des Verschleißzustands in besonders zuverlässiger und robuster Weise. Zum Erfassen der Drehbewegung kann eine Sensoreinheit, insbesondere reversibel ankoppelbar, in drehmomentübertragende Verbindung mit der mindestens einen Tragrolle gebracht werden. Alternativ kann das Erfassen der Drehbewegung kontaktlos erfolgen. Zum Erfassen der Drehbewegung kann eine Anzahl an Umdrehungen und/oder eine Drehzahl und/oder eine Drehzahländerung und/oder eine Auslaufdauer bestimmt werden.

Gemäß einem Aspekt der Erfindung wird eine den Rolladapter eindeutig kennzeichnende Identifikationskennung erfasst. Zum Erfassen der Identifikationskennung kann ein mit dem jeweiligen Rolladapter verbundenes Identifikationsmittel ausgelesen werden. Insbesondere kann das Identifikationsmittel in Form eines RFID-Transponders und/oder eines Matrixcodes und/oder eines Strichcodes ausgelesen werden. Vorzugsweise wird der Messwert und/oder der Verschleißzustand zusammen mit der Identifikationskennung des zugehörigen Rolladapters, insbesondere in einem Datenbanksystem, gespeichert. Der Verschleißzustand des jeweiligen Rolladapters kann fortlaufend überwacht werden.

Zum Erfassen des Messwerts kann eine Beschleunigung, insbesondere eine Vibration, insbesondere des Rolladapters und/oder einer Trageinheit zum Tragen des Rolladapters, bestimmt werden. Ein Erfassen des Messwerts kann auch ein akustisches Signal, insbesondere ein Ultraschallsignal, insbesondere im unmittelbaren Umfeld des Rolladapters und/oder an der Trageinheit, bestimmt werden. Alternativ oder zusätzlich kann zum Erfassen des Messwerts eine Temperatur, insbesondere des Rolladapters, insbesondere des Drehlagers, bestimmt werden. Zum Erfassen des Messwerts kann auch eine Kapazität und/oder eine Impedanz und/oder eine elektrische Stromstärke und/oder eine elektrische Spannung bestimmt werden. Insbesondere kann zum Erfassen des Messwerts eine Magnetfeldänderung bestimmt werden.

Ein derartiges Verfahren ist besonders wirtschaftlich realisierbar und im Betrieb robust. Vorzugsweise wird der Rolladapter beim Erfassen des Messwerts über eine zweite Tragrolle, insbesondere mittels einer mit der Tragrolle zusammenwirkenden Tragschiene der Trageinheit, getragen.

Ein Verfahren, bei dem zum Erfassen des Messwerts die mindestens eine Tragrolle optisch erfasst wird, ist besonders flexibel anwendbar und im Betrieb robust. Vorzugsweise wird eine Drehbewegung der mindestens einen Tragrolle optisch erfasst. Gemäß einem Aspekt der Erfindung wird der Rolladapter, insbesondere die mindestens eine Tragrolle, beim Erfassen des Messwerts linear, insbesondere relativ zu einer Sensoreinheit zum Erfassen des Messwerts, verlagert. Insbesondere kann das Erfassen des Messwerts während des kontinuierlichen Verlagerns des Rolladapters entlang einer Förderlinie einer Förderschieneneinrichtung erfolgen. Das Erfassen des Messwerts erfolgt vorzugsweise ohne Auskoppeln des Rolladapters aus der Förderlinie der Förderschieneneinrichtung. Das Verfahren kann somit besonders einfach an einem bestehenden Hängefördersystem angewandt werden und effizient ausgeführt werden.

Zum optischen Erfassen des Messwerts kann eine optische Markierung, insbesondere ein Reflektionsunterschied und/oder ein Farbunterschied und/oder ein Transmissionsunterschied und/oder ein struktureller Unterschied, insbesondere eine Oberflächenrauheit und/oder eine Oberflächenprägung, des Rolladapters, insbesondere der mindestens einen Tragrolle und/oder des Drehlagers, erfasst werden.

Gemäß einem Aspekt der Erfindung erfolgt das Drehantreiben der mindestens einen Tragrolle durch ein Abrollen der mindestens einen Tragrolle auf einem linear und/oder rotierend angetriebenen Gegenrollenkörper. Alternativ kann das Drehantreiben der mindestens einen Tragrolle durch eine stirnseitige Übertragung einer Drehbewegung auf die Tragrolle erfolgen.

Ein Verfahren nach Anspruch 10 gewährleistet das Bestimmen des Verschleißzustands in besonders zuverlässiger Weise. Vorzugsweise wird der Rolladapter beim Erfassen des Messwerts beidseitig geführt. Der Rolladapter wird vorzugsweise an dem Grundkörper geführt. Gemäß einem Aspekt der Erfindung wird der Rolladapter, insbesondere beidseitig, oberhalb und unterhalb der mindestens einen Tragrolle seitlich geführt. Eine Orientierung des Rolladapters relativ zu einer Sensoreinheit zum Erfassen des Messwerts kann somit zuverlässig bestimmt werden, wobei das Erfassen des Messwerts besonders robust erfolgt.

Ein Verfahren nach Anspruch 11 ist besonders wirtschaftlich anwendbar.

Ein Verfahren nach Anspruch 12 ermöglicht einen besonders effizienten Betrieb eines Hängefördersystems. Vorzugsweise erfolgt das Aussortieren des Rolladapters aus der Förderschieneneinrichtung vollständig automatisiert. Das Aussortieren des Rolladapters kann unmittelbar anschließend an das Erfassen des Verschleißzustands erfolgen. Alternativ kann der Verschleißzustand zusammen mit der Identifikationskennung des jeweiligen Rolladapters gespeichert werden und der Rolladapter kann zu einem späteren Zeitpunkt aussortiert werden. Zum Aussortieren des Rolladapters aus der Förderschieneneinrichtung kann dieser aus der Förderschieneneinrichtung ausgekoppelt werden und entlang einer Aussortierlinie verlagert werden.

Der Förderschieneneinrichtung kann auch ein Rolladapter zugeführt werden. Vorzugsweise wird jeder aussortiere Rolladapter durch Zuführen eines funktionsfähigen Rolladapters ersetzt. Gemäß einem Aspekt der Erfindung wird eine Anzahl an Rolladaptern in der Förderschieneneinrichtung im Wesentlichen konstant gehalten. Das Hängefördersystem kann hierzu eine Zuführeinrichtung zum Zuführen von Rolladaptern in die Förderschieneneinrichtung aufweisen. Die Zuführeinrichtung kann in Signalverbindung mit einer Steuereinheit zum Steuern der Anzahl an Rolladaptern in der Förderschieneneinrichtung stehen.

Weitere Merkmale, Vorteile und Einzelheiten der Erfindung ergeben sich aus der nachfolgenden Beschreibung hand der Figuren. Es zeigen:
- Fig. 1: eine perspektivische Darstellung eines Ausschnitts eines Hängefördersystems mit einer Förderschieneneinrichtung zum Transportieren eines Rolladapters und einer Rollenprüfeinrichtung für den Rolladapter,
- Fig. 2: eine perspektivische Detaildarstellung der Rollenprüfeinrichtung gemäß dem Ausschnitt II in Fig. 1, wobei eine Förderungsschiene der Rollenprüfeinrichtung im Bereich des Rolladapters teilweise unterbrochen dargestellt ist,
- Fig. 3: eine Seitenansicht der Rollenprüfeinrichtung in Fig. 2,
- Fig. 4: eine Schnittdarstellung der Rollenprüfeinrichtung entlang der Schnittlinie IV-IV in Fig. 1 und
- Fig. 5: eine Seitenansicht auf einen Rolladapter wobei eine Tragrolle des Rolladap- ters eine Markierung zum Erfassen einer Drehbewegung aufweist.

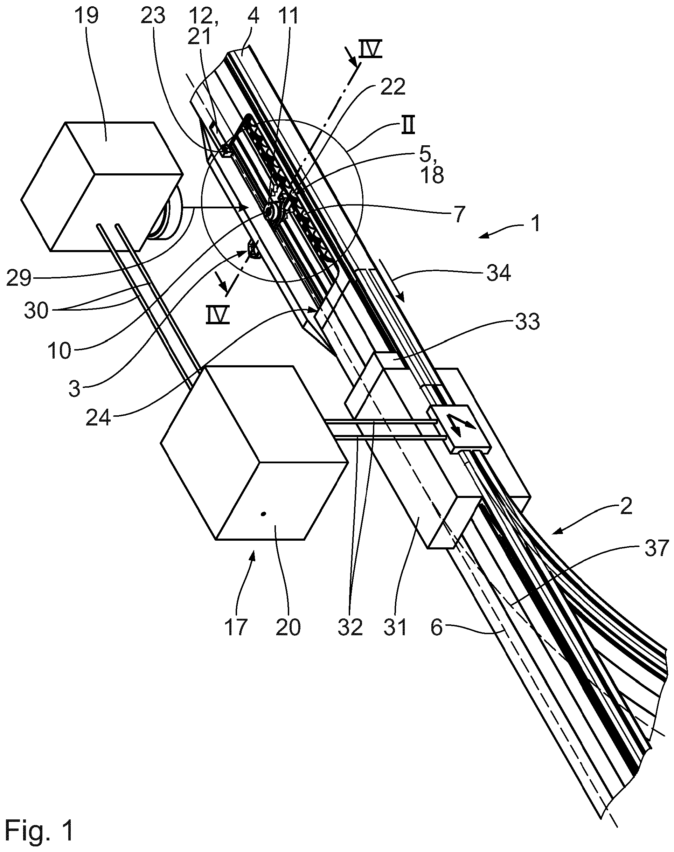

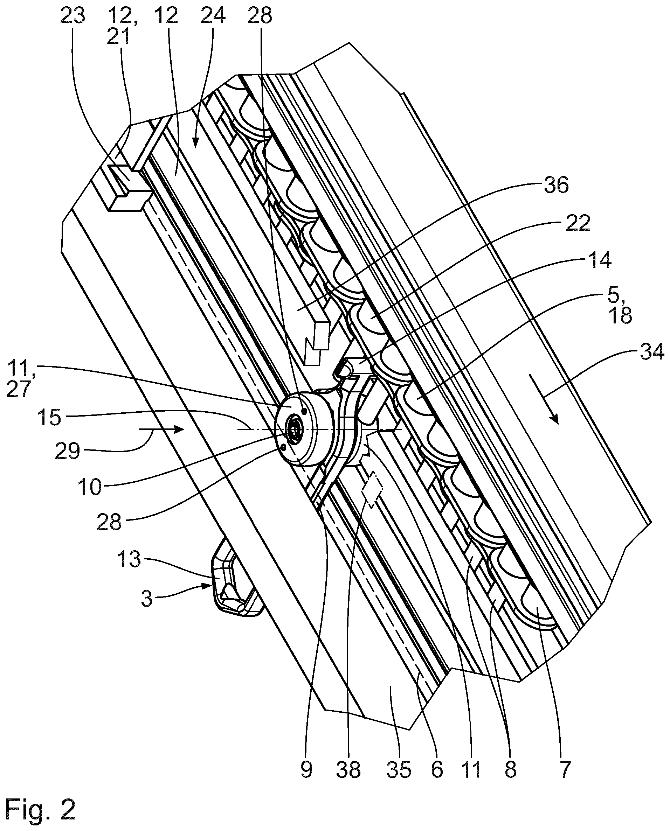

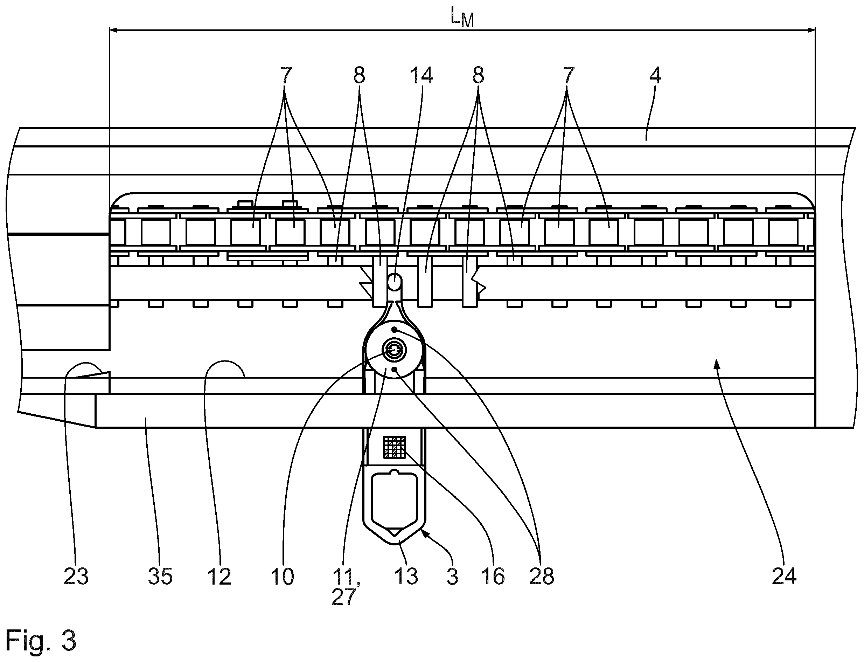

Nachfolgend ist anhand der Fig. 1 bis Fig. 4 ein Ausführungsbeispiel eines Hängefördersystems 1 zum Transportieren von Waren beschrieben. Das Hängefördersystem 1 umfasst eine Förderschieneneinrichtung 2 und mehrere an der Förderschieneneinrichtung 2 verschiebbar gelagerte Rolladapter 3. Die Förderschieneneinrichtung 2 weist ein Schienenprofil 4 und einen Schienenantrieb 5 auf. Der Rolladapter 3 ist in dem Schienenprofil 4 formschlüssig gelagert, wobei der Rolladapter 3 entlang einer Förderlinie 6 linear entlang des Schienenprofils 4 verlagerbar ist.

Zum Verlagern des Rolladapters 3 entlang der Förderlinie 6 umfasst der Schienenantrieb 5 eine mit dem Rolladapter 3 zusammenwirkende Förderkette 7. Die Förderkette 7 ist in dem Schienenprofil 4 geführt. Mittels eines nicht dargestellten Antriebsmotors des Schienenantriebs 5 ist die Förderkette 7 relativ zu dem Schienenprofil 4 verlagerbar.

Die Förderkette 7 ist als Rollenkette ausgebildet. Die Förderkette 7 umfasst zum linearen Antreiben des Rolladapters 3 mehrere Mitnehmerstifte 8.

Der Rolladapter 3 umfasst einen Grundkörper 9, zwei daran angeordnete Drehlager 10 und je eine mittels des Drehlagers drehbar an dem Grundkörper angebrachte Tragrolle 11. Zum linearen Verlagern des Rolladapters 3 in dem Schienenprofil 4 wälzen die beiden Tragrollen 11 auf einer Tragschiene 12 des Schienenprofils 4 ab.

Der Rolladapter 3 weist eine an dem Grundkörper 9 angeordnete Tragöse 13 zum Anbringen von Transportgut und einen an dem Grundkörper 9 angebrachten Antriebsfortsatz 14 zum Verlagern des Rolladapters 3 entlang der Förderlinie 6 auf. Der Antriebsfortsatz 14 ist zum Zusammenwirken mit den Mitnehmerstiften 8 ausgebildet. Der Antriebsfortsatz 14 ist als sich parallel zu einer Drehachse 15 der Tragrollen 11 orientierter Balken ausgebildet.

Der Rolladapter 3 weist einen Matrixcode 16 auf. Der Matrixcode 16 ist in den Grundkörper 9 eingeprägt. Der Matrixcode 16 entspricht einer für jeden Rolladapter 3 individuellen Identifikationskennung.

Das Hängefördersystem 1 weist eine Rollenprüfeinrichtung 17 für den Rolladapter 3 auf. Die Rollenprüfeinrichtung 17 umfasst eine Antriebseinheit 18 zum Drehantreiben mindestens einer der Tragrollen 11 des Rolladapters 3, eine Sensoreinheit 19 zum Erfassen eines mit einem Verschleißzustand des Drehlagers 10 korrelierenden Messwerts und eine Auswerteeinheit 20 zum Bestimmen des Verschleißzustands anhand des Messwerts. Die Antriebseinheit 18 umfasst einen Gegenrollenkörper 21 und ein Antriebsmittel 22 zum linearen Verlagern des Rolladapters 3 relativ zu dem Gegenrollenkörper 21. Das Antriebsmittel 22 ist in Form des Schienenantriebs 5 ausgebildet. Der Gegenrollenkörper 21 ist in Form der Tragschiene 12 ausgebildet. Der Gegenrollenkörper 21 umfasst eine von der Tragschiene 12 vorspringende Rollenrampe 23 zum Erhöhen einer auf die mindestens eine Tragrolle wirkenden Anpresskraft.

Die Rollenprüfeinrichtung 17 weist ein Messfeld 24 auf. Das Messfeld 24 erstreckt sich entlang der Förderlinie 6 über eine Messfeldlänge L_{M}. Im Bereich des Messfelds 24 ist der Rolladapter 3, insbesondere die Tragrolle 11 von der Sensoreinheit 19 erfassbar.

Im Bereich des Messfelds 24 steht lediglich eine der Tragrollen 11 in Kontakt mit der Tragschiene 12. Die andere Tragrolle 11 ist im Bereich des Messfelds 24 frei drehbar an dem Rolladapter 3 angeordnet. Hierzu ist die zugehörige Tragschiene 12 im Bereich des Messfelds 24 ausgespart. Die Rollenrampe 23 ist unmittelbar vor dem Messfeld 24 auf Seiten der in dem Messfeld 24 frei drehbaren Tragrolle 11 angeordnet.

Im Bereich des Messfelds 24 weist das Schienenprofil 4 ein Messfenster 25 auf. Dass Messfenster 25 ist als rechteckförmige Ausnehmung in dem Schienenprofil 4 ausgebildet. Das Messfenster 25 ist von einer lichtdurchlässigen Scheibe 26, insbesondere einer Plexiglasscheibe, überdeckt.

Die Sensoreinheit 19 ist in Form einer Kamera ausgebildet. Die Sensoreinheit 19 ist zum optischen Erfassen der Tragrolle 11 im Bereich des Messfelds 24 ausgebildet. Insbesondere ist die Sensoreinheit 19 zum optischen Erfassen einer Drehbewegung der Tragrolle 11 ausgebildet. Die der Sensoreinheit 19 zugeordnete Tragrolle 11 wird im Folgenden auch als Prüfrolle 27 bezeichnet.

Die jeweilige Tragrolle 11 weist zum optischen Erfassen der Drehbewegung mittels der Sensoreinheit 19 eine Markierung 28 auf. Die Tragrollen 11 sind in einem Spritzgussverfahren hergestellt. Die Markierung 28 ist in Form von aus dem Spritzgussverfahren resultierenden Anspritzpunkten ausgebildet.

Eine Erfassungsrichtung 29 der Sensoreinheit 19 ist parallel zu der Drehachse 15 orientiert. Ein Messabstand x_{M} zwischen der Sensoreinheit 19 und der Prüfrolle 27 beträgt 200 mm. Die Sensoreinheit 19 steht über eine zentrale Signalleitung 30 in Signalverbindung mit der Auswerteeinheit 20.

Die Rollenprüfeinrichtung 17 weist eine Sortierweiche 31 auf. Die Sortierweiche 31 ist zum automatisierten Aussortieren des Rolladapters 3 aus der Förderschieneneinrichtung 2 ausgebildet. Die Sortierweiche 31 steht über eine Weichensignalleitung 32 in Signalverbindung mit der Auswerteeinheit 20.

Die Rollenprüfeinrichtung 17 umfasst ein Identifikationsmittel-Lesegerät 33 zum Erfassen eines mit dem Rolladapter 3 verbundenen Identifikationsmittels, insbesondere des Matrixcodes 16. Das Identifikationsmittel-Lesegerät 33 ist unmittelbar vor der Sortierweiche 31 angeordnet. Als weiteres Identifikationsmittel-Lesegerät 33 ist die Sensoreinheit 19 ausgebildet.

Die Funktionsweise des Hängefördersystems 1, der Rollenprüfeinrichtung 17 und des Rolladapters 3 ist wie folgt:
Vom geführten Verlagern des Rolladapters 3 entlang einer Förderrichtung 34 weist die Rollenprüfeinrichtung zwei Führungsschienen 35 auf. Die Führungsschienen 35 sind zum seitlichen Führen des Rolladapters 3 im Bereich des Messfelds 24 ausgebildet. Die Führungsschienen 35 sind entlang der Förderlinie 6 an beiden Seiten des Rolladapters 3, jeweils unterhalb der Tragschienen 12 angeordnet. Die Führungsschienen 35 sind zum seitlichen Zusammenwirken mit dem Grundkörper 9 ausgebildet. Die Führungsschienen 35 sind einstückig mit dem Schienenprofil 4 ausgebildet.

Im Bereich des Antriebsfortsatzes 14 wird der Rolladapter 3 durch Antriebsführungsschienen 36 seitlich geführt. Die Antriebsführungsschienen 36 sind entlang der Förderlinie 6 beidseitig an dem Rolladapter 3 angeordnet. Die Antriebsführungsschienen 36 wirken im Bereich des Messfelds 24 mit dem Antriebsfortsatz 14 zusammen.

Der Rolladapter 3 ist in dem Schienenprofil 4 angeordnet und entlang der Förderlinie 6 verschiebbar gelagert. Hierzu wälzen die Tragrollen 11 auf den Tragschienen 12 ab. Mittels des Schienenantriebs 5 wird der Rolladapter 3 über den Antriebsfortsatz 14 durch einen der Mitnehmerstifte 8 der Förderkette 7 entlang einer Förderrichtung 34 relativ zu dem Schienenprofil 4 verlagert.

Vorzugsweise stehen entlang der Förderlinie 6 stets beide Tragrollen 11 in Kontakt mit der jeweiligen Tragschiene 12. Aufgrund einer spielbehafteten Lagerung des Rolladapters 3 in dem Schienenprofil 4 ist nicht auszuschließen, dass zumindest eine der Tragrollen 11 zumindest zeitweise den Kontakt zu der zugehörigen Tragschiene 12 verliert. Um den Kontakt der Prüfrolle 27 mit der als Gegenrollenkörper 21 ausgebildeten Tragschiene 12 unmittelbar vor dem Messfeld 24 zuverlässig zu gewährleisten, ist unmittelbar vor dem Messfeld 24 die Rollenrampe 23 an der Tragschiene 12 angeordnet. Der Rolladapter 3 wird entlang der Förderlinie 6 über die Rollenrampe 23 verlagert. Die von dem Gegenrollenkörper 21 auf die Prüfrolle 27 wirkende Anpresskraft wird erhöht und die Prüfrolle 27 wird zuverlässig drehangetrieben.

Der Rolladapter 3 wird in das Messfeld 24 verlagert. Im Bereich des Messfelds 24 wird der Rolladapter 3 ausschließlich von der der Sensoreinheit 19 abgewandten Tragrolle 11 getragen. Die zu der Prüfrolle 27 gehörige Tragschiene 12 ist im Bereich des Messfelds 24 ausgespart. Im Bereich des Messfelds 24 steht die Prüfrolle 27 außer Kontakt mit der Tragschiene 12 und ist somit drehbar an dem Grundkörper 9 angeordnet. Im Bereich des Messfelds 24 wird der Rolladapter 3 kopfseitig durch Zusammenwirken der Antriebsführungsschienen 36 mit dem Antriebsfortsatz 14 und fußseitig durch Zusammenwirken der Führungsschienen 35 mit dem Grundkörper 9 seitlich geführt. Die Drehachse 15 wird durch die seitliche Führung zuverlässig parallel zu der Erfassungsrichtung 29 ausgerichtet. Die der Sensoreinheit 19 abgewandte Tragrolle 11 wird zuverlässig auf der zugehörigen Tragschiene 12 gehalten.

Mittels der Sensoreinheit 19 wird zum Identifizieren des Rolladapters 3 der Matrixcode 16 erfasst. Zum Erfassen des mit dem Verschleißzustand des Drehlagers 10 der Prüfrolle 27 korrelierenden Messwerts wird die Prüfrolle 27, insbesondere die Markierungen 28, kontinuierlich optisch erfasst. Der Messwert entspricht einer von der Sensoreinheit 19 erfassten Bildfolge. Mit der Auswerteeinheit 20 wird anhand des Messwerts, insbesondere anhand der Bildfolge, der Verschleißzustand des Drehlagers 10 der Prüfrolle 27 bestimmt. Hierzu wird zunächst eine Änderung der Position der Markierungen 28 über der Zeit bestimmt. Aus der Positionsänderung der Markierungen 28 wird eine Anfangsdrehzahl der Prüfrolle 27 beim Eintritt in das Messfeld 24 bestimmt. Anhand der Positionsänderung der Markierungen 28 entlang der Förderlinie 6 wird eine Drehzahländerung der Prüfrolle 27 bestimmt. Insbesondere wird eine Auslaufdauer T der Prüfrolle 27 bestimmt. Die Auslaufdauer T entspricht einer Zeitdauer, welche zwischen dem Eintritt des Rolladapters 3 in das Messfeld 24 und dem Erlöschen der Drehbewegungen der Prüfrolle 27 relativ zu dem Grundkörper 9 verstreicht. Die Auslaufdauer T korreliert mit einem Drehwiderstand der Prüfrolle 27 relativ zu dem Grundkörper 9. Der Drehwiderstand nimmt mit zunehmendem Verschleiß des Drehlagers 10 zu. Über die Auslaufdauer T wird somit der Verschleißzustand des Drehlagers 10 bestimmt. Der Verschleißzustand der Prüfrolle 27 wird in Verknüpfung mit der dem Matrixcode 16 entsprechenden Identifikationskennung gespeichert.

Mittels der Auswerteeinheit 20 wird der Verschleißzustand mit einem zulässigen Verschleißzustand verglichen. Sofern der Verschleißzustand einen Verschleißgrenzwert überschreitet, wird der Rolladapter 3 als verschlissen gekennzeichnet. Mittels der Sortierweiche 31 wird der Rolladapter 3 über eine Ausschuss-Förderlinie 37 aus der Förderschieneneinrichtung 2 entfernt. Hierzu wird unmittelbar vor der Sortierweiche 31 die dem Matrixcode 16 entsprechende Identifikationskennung des Rolladapters 3 erfasst. Sofern der Rolladapter 3 als verschlissen markiert ist, wird die Sortierweiche 31 zum Fördern des Rolladapters 3 entlang der Ausschuss-Förderlinie 37 geschalten. Ist der Rolladapter 3 als funktionsfähig gekennzeichnet, wird die Sortierweiche 31 mittels der Auswerteeinheit 20 zum Fördern des Rolladapters 3 entlang der Förderlinie 6 geschalten.

Zum Prüfen eines Verschleißzustands des Drehlagers 10 der zweiten Tragrolle 11 weist das Hängefördersystem 1 eine nicht dargestellte zweite Rollenprüfeinrichtung 17 auf. Der Aufbau der zweiten Rollenprüfeinrichtung 17 entspricht dem Aufbau der vorstehend beschriebenen Rollenprüfeinrichtung 17, wobei der Aufbau der Rollenprüfeinrichtung 17 zu einer Symmetrieebene 38 des Rolladapters 3 gespiegelt ausgebildet ist. Der Verschleißzustand der beiden Drehlager 10 des Rolladapters 3 wird entlang der Förderlinie 6 nacheinander bestimmt. Sofern der Verschleißzustand eines der beiden Drehlager 10 den Verschleißgrenzwert überschreitet, wird der Rolladapter 3 über die Sortierweiche 31 aus der Förderschieneneinrichtung 2 entfernt.

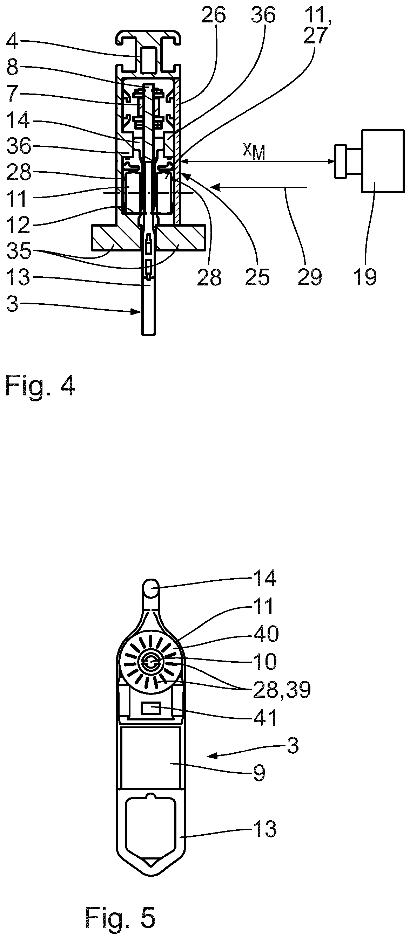

Anhand der Fig. 5 wird ein Beispiel eines Rolladapters 3 beschrieben. Im Unterschied zu dem vorstehend beschriebenen Beispiel ist die Markierung 28 der Tragrollen 11 in Form von mehreren, sich radial zu der Drehachse 15 erstreckenden Vertiefungen 39 im Bereich einer Seitenfläche 40 der jeweiligen Tragrolle 11 ausgebildet. Insgesamt sind an jeder der Tragrollen 11 fünfzehn Vertiefungen 39 angeordnet. Die Drehzahl der jeweiligen Tragrolle 11, die Auslaufdauer T und damit der Verschleißzustand der jeweiligen Tragrolle 11 können somit besonders exakt bestimmt werden.

Zur berührungs- und sichtkontaktlosen Erfassung der Identifikationskennung des Rolladapters 3 weist dieser einen RFID-Transponder 41 auf. Das Identifikationsmittel-Lesegerät 33 weist entsprechend ein RFID-Lesegerät auf.

Die Funktionsweise des in der Fig. 5 dargestellten Rolladapters 3 entspricht der Funktionsweise des Rolladapters 3 gemäß dem vorstehend beschriebenen Beispiel. Zum Erfassen der Drehbewegung der Prüfrolle 27 relativ zu dem Grundkörper 9 wird die in Form der Vertiefungen 39 ausgebildete Markierung 28 erfasst. Die Identifikationskennung des Rolladapters 3 wird durch Auslesen des RFID-Transponders 41 erfasst.

Mittels der Rollenprüfeinrichtung 17 kann der Verschleißzustand der Rolladapter 3, insbesondere der Drehlager 10 der jeweiligen Tragrolle 11, automatisiert bestimmt werden. Verschlissene Rolladapter 3 können über die Sortierweiche 31 automatisiert aus der Förderschieneneinrichtung 2 entfernt werden. Ein durch verschlissene Rolladapter 3 bedingter Stillstand des Hängefördersystems 1 kann durch das frühzeitige Erkennen und Aussortieren der verschlissenen Rolladapter 3 zuverlässig verhindert werden.

Das Hängefördersystem 1 mit der Rollenprüfeinrichtung 17 kann somit besonders zuverlässig und effizient betrieben werden. Das automatisierte Erkennen und Aussortieren der verschlissenen Rolladapter 3 ermöglicht einen besonders wirtschaftlichen Betrieb des Hängefördersystems 1.

## Patentansprüche

1. Rollenprüfeinrichtung für einen Rolladapter (3) eines Hängefördersystems, umfassend
- eine Antriebseinheit (18) zum Drehantreiben mindestens einer Tragrolle (11) des Rolladapters (3),
- eine Sensoreinheit (19) zum Erfassen eines mit einem Verschleißzustand eines Drehlagers (10) der mindestens einen Tragrolle (11) korrelierenden Messwerts, wobei die Sensoreinheit (19) einen Drehsensor zum Erfassen des Messwerts in Form einer Drehbewegung der mindestens einen Tragrolle (11) aufweist,
- eine Auswerteeinheit (20) zum Bestimmen des Verschleißzustands anhand der Drehbewegung der mindestens einen Tragrolle (11), und
- eine Trageinheit (4) zum Tragen des Rolladapters (3) in einem Erfassungsbereich (24) der Sensoreinheit (19) derart, dass die mindestens eine Tragrolle (11) frei drehbar ist.

2. Rollenprüfeinrichtung nach Anspruch 1, **dadurch gekennzeichnet, dass** die Sensoreinheit (19) ein Kamerasystem zum optischen Erfassen des Messwerts aufweist.

3. Rollenprüfeinrichtung nach einem der vorstehenden Ansprüche,
**dadurch gekennzeichnet, dass** die Antriebseinheit (18) einen Gegenrollenkörper (21) und ein Antriebsmittel (22) zum linearen Verlagern des Rolladapters (3) relativ zu dem Gegenrollenkörper (21) aufweist, wobei der Gegenrollenkörper (21) derart an der mindestens einen Tragrolle (11) angeordnet ist, dass die mindestens eine Tragrolle (11) durch das Verlagern relativ zu dem Gegenrollenkörper (21) drehantreibbar ist, wobei insbesondere der Gegenrollenkörper (21) eine vorspringende Rollenrampe (23) zum Erhöhen einer zwischen dem Gegenrollenkörper (21) und der mindestens einen Tragrolle (11) wirkenden Anpresskraft aufweist.

4. Rollenprüfeinrichtung nach einem der vorstehenden Ansprüche, **gekennzeichnet durch** mindestens eine Führungsschiene (35, 36) zum seitlichen Führen des Rolladapters (3) in einem Erfassungsbereich (24) der Sensoreinheit (19).

5. Hängefördersystem zum Transportieren von Waren, umfassend
- eine Rollenprüfeinrichtung (17) nach einem der Ansprüche 1 bis 4 und
- eine Förderschieneneinrichtung (2) zum Transportieren des Rolladapters (3).

6. Hängefördersystem nach Anspruch 5, **dadurch gekennzeichnet, dass** die Rollenprüfeinrichtung (17) zum auskoppelfreien Prüfen des Rolladapters (3) in eine Förderlinie (6) der Förderschieneneinrichtung (2) integriert ist.

7. Hängefördersystem nach Anspruch 5 oder 6, **gekennzeichnet durch** eine mit der Auswerteeinheit (20) in Signalverbindung stehende Sortierweiche (31) zum automatisierten Aussortieren des Rolladapters (3) aus der Förderschieneneinrichtung (2) in Abhängigkeit von dessen Verschleißzustand.

8. Verfahren zum Betreiben einer Rollenprüfeinrichtung, umfassend die Schritte:
- Bereitstellen eines Rolladapters (3) mit
-- einem Grundkörper (9) und
-- mindestens einer mittels eines Drehlagers (10) drehbar an dem Grundkörper (9) angebrachten Tragrolle (11),
- Drehantreiben der mindestens einen Tragrolle (11),
- Erfassen eines mit einem Verschleißzustand der mindestens einen Tragrolle (11) korrelierenden Messwerts in Form einer Drehbewegung der mindestens einen Tragrolle (11), wobei beim Erfassen des Messwerts der Rolladapter (3) derart getragen wird, dass die mindestens eine Tragrolle (11) frei drehbar ist, und
- Bestimmen des Verschleißzustands anhand des Messwerts.

9. Verfahren nach Anspruch 8, **dadurch gekennzeichnet, dass** zum Erfassen des Messwerts die mindestens eine Tragrolle (11) optisch erfasst wird.

10. Verfahren nach Anspruch 8 oder 9, **dadurch gekennzeichnet, dass** der Rolladapter (3) beim Erfassen des Messwerts seitlich geführt wird.

11. Verfahren nach einem der Ansprüche 8 bis 10, **dadurch gekennzeichnet, dass** das Erfassen des Messwerts während eines kontinuierlichen Transports des Rolladapters (3) entlang einer Förderlinie (6) erfolgt.

12. Verfahren nach einem der Ansprüche 8 bis 11, **gekennzeichnet durch** Vergleichen des Verschleißzustands mit einem zulässigen Verschleißzustand und Aussortieren des Rolladapters (3) aus einer Förderschieneneinrichtung (2), sofern der Verschleißzustand außerhalb des zulässigen Verschleißzustands liegt.

## Claims

1. Roller testing device for a roller adapter (3) of an overhead conveyor system, comprising
- a drive unit (18) for rotating at least one carrying roller (11) of the roller adapter (3),
- a sensor unit (19) for detecting a measured value correlating with a wear state of a pivot bearing (10) of the at least one carrying roller (11), wherein the sensor unit (19) has a rotary sensor for detecting the measured value in the form of a rotary movement of the at least one carrying roller (11),
- an evaluation unit (20) for determining the state of wear on the basis of the rotational movement of the at least one carrying roller (11), and
- a carrying unit (4) for carrying the roller adapter (3) in a capturing region (24) of the sensor unit (19) in such a manner that the at least one carrying roller (11) is freely rotatable.

2. Roller testing device according to claim 1, **characterized in that** the sensor unit (19) has a camera system for optically recording the measured value.

3. Roller testing device according to one of the preceding claims, **characterized in that** the drive unit (18) has a counter roller body (21) and a drive means (22) for linearly displacing the roller adapter (3) relative to the counter roller body (21), the counter roller body (21) being arranged in such a manner on the at least one carrying roller (11), that the at least one carrying roller (11) can be driven in rotation relative to the counter roller body (21) by the displacement, wherein in particular the counter roller body (21) has a projecting roller ramp (23) for increasing a contact pressure acting between the counter roller body (21) and the at least one carrying roller (11).

4. Roller testing device according to one of the preceding claims, **characterized by** at least one guiding rail (35, 36) for laterally guiding the roller adapter (3) in a capturing region (24) of the sensor unit (19).

5. Overhead conveyor system for transporting goods, comprising
- a roller testing device (17) according to one of claims 1 to 4 and
- a conveyor rail device (2) for transporting the roller adapter (3).

6. Overhead conveyor system according to claim 5, **characterized in that** the roller testing device (17) for uncoupling-free testing of the roller adapter (3) is integrated into a conveying line (6) of the conveyor rail device (2).

7. Overhead conveyor system according to claim 5 or 6, **characterized by** a sorting switch (31) in signal communication with the evaluation unit (20) for automatically sorting the roller adapter (3) out of the conveyor rail device (2) as a function of its state of wear.

8. A method of operating a roller testing device comprising the steps of:
- Providing a roller adapter (3) with
-- a base body (9) and
-- at least one carrying roller (11) mounted rotatably on the base body (9) by means of a pivot bearing (10),
- Rotary drive of at least one carrying roller (11),
- detection of a measured value correlating with a state of wear of the at least one carrying roller (11) in the form of a rotary movement of the at least one carrying roller (11), wherein, when the measured value is detected, the roller adapter (3) is carried in such a manner that the at least one carrying roller (11) is freely rotatable, and
- Determine the state of wear based on the measured value.

9. Method according to claim 8, **characterized in that** the at least one carrying roller (11) is optically detected in order to record the measured value.

10. Method according to claim 8 or 9, **characterized in that** the roller adapter (3) is guided laterally when the measured value is detected.

11. Method according to one of claims 8 to 10, **characterized in that** the measured value is recorded during a continuous transport of the roller adapter (3) along a conveying line (6).

12. Method according to one of claims 8 to 11, **characterized by** comparing the state of wear with an admissible state of wear and sorting out the roller adapter (3) from a conveyor rail device (2) if the state of wear is outside the admissible state of wear.

## Revendications

1. Dispositif d'essai de rouleaux pour un adaptateur à rouleaux (3) d'un système de transport suspendu, comprenant
- une unité d'entraînement (18) destinée à entraîner en rotation au moins un rouleau porteur (11) de l'adaptateur à rouleaux (3),
- une unité de détection (19) destinée à détecter une valeur de mesure en corrélation avec un état d'usure d'un palier de rotation (10) de l'au moins un rouleau porteur (11), l'unité de détection (19) présentant un capteur de rotation destiné à mesurer la valeur de mesure sous la forme d'un mouvement de rotation de l'au moins un rouleau porteur (11),
- une unité d'évaluation (20) destinée à déterminer l'état d'usure à l'aide du mouvement de rotation de l'au moins un rouleau porteur (11), et
- une unité de support (4) destinée à supporter l'adaptateur à rouleaux (3) dans une zone de détection (24) de l'unité de détection (19) de telle manière que l'au moins un rouleau porteur (11) peut tourner librement.

2. Dispositif d'essai de rouleaux selon la revendication 1, **caractérisé en ce que** l'unité de détection (19) présente un système de caméra destiné à détecter la valeur de mesure de manière optique.

3. Dispositif d'essai de rouleaux selon l'une des revendications précédentes, **caractérisé en ce que** l'unité d'entraînement (18) présente un corps complémentaire au rouleau (21) et un moyen d'entraînement (22) destiné à déplacer linéairement l'adaptateur à rouleaux (3) par rapport au corps complémentaire au rouleau (21), le corps complémentaire au rouleau (21) étant disposé sur l'au moins un rouleau porteur (11) de telle manière que l'au moins un rouleau porteur (11) peut, du fait du déplacement, être entraîné en rotation par rapport au corps complémentaire au rouleau (21), le corps complémentaire au rouleau (21) présentant en particulier une rampe à rouleau (23) en saillie destinée à augmenter une force de pression agissant entre le corps complémentaire au rouleau (21) et l'au moins un rouleau porteur (11).

4. Dispositif d'essai de rouleaux selon l'une des revendications précédentes, **caractérisé par** au moins un rail de guidage (35, 36) destiné à guider latéralement l'adaptateur à rouleaux (3) dans une zone de détection (24) de l'unité de détection (19).

5. Système de transport suspendu destiné à transporter des marchandises, comprenant
- un dispositif d'essai de rouleaux (17) selon l'une des revendications 1 à 4 et
- un dispositif de rail de transport (2) destiné à transporter l'adaptateur à rouleaux (3).

6. Système de transport suspendu selon la revendication 5, **caractérisé en ce que** le dispositif d'essai de rouleaux (17) est intégré dans une ligne de transport (6) du dispositif de rail de transport (2) pour l'essai sans découplage de l'adaptateur à rouleaux (3).

7. Système de transport suspendu selon la revendication 5 ou 6, **caractérisé par** un aiguillage de tri (31) en liaison de signalisation avec l'unité d'évaluation (20) pour extraire automatiquement l'adaptateur à rouleaux (3) du dispositif de rail de transport (2) en fonction de son état d'usure.

8. Procédé de fonctionnement d'un dispositif d'essai de rouleaux, comprenant les étapes consistant à :
- fournir un adaptateur à rouleaux (3) comportant
-- un corps de base (9) et
-- au moins un rouleau porteur (11) monté sur le corps de base (9) de manière rotative au moyen d'un palier de rotation (10),
- entraîner en rotation l'au moins un rouleau porteur (11),
- détecter une valeur de mesure en corrélation avec un état d'usure de l'au moins un rouleau porteur (11) sous la forme d'un mouvement de rotation de l'au moins un rouleau porteur (11), l'adaptateur à rouleaux (3) étant supporté lors de la détection de la valeur de mesure de telle manière que l'au moins un rouleau porteur (11) peut tourner librement, et
- déterminer l'état d'usure à l'aide de la valeur de mesure.

9. Procédé selon la revendication 8, **caractérisé en ce que,** pour détecter la valeur de mesure, l'au moins un rouleau porteur (11) est détecté de manière optique.

10. Procédé selon la revendication 8 ou 9, **caractérisé en ce que** l'adaptateur à rouleaux (3) est guidé latéralement lors de la détection de la valeur de mesure.

11. Procédé selon l'une des revendications 8 à 10, **caractérisé en ce que** la détection de la valeur de mesure est effectuée pendant un transport continu de l'adaptateur à rouleaux (3) le long d'une ligne de transport (6).

12. Procédé selon l'une des revendications 8 à 11, **caractérisé par** la comparaison de l'état d'usure avec un état d'usure admissible et l'extraction de l'adaptateur à rouleaux (3) d'un dispositif de rail de transport (2) si l'état d'usure se trouve en dehors de l'état d'usure admissible.
